Europäisches Patentamt

European Patent Office

Office européen des brevets

(19)

(11) Publication number: **0 261 974**
**A1**

(12) # EUROPEAN PATENT APPLICATION

(21) Application number: **87308475.0**

(22) Date of filing: **24.09.87**

(51) Int. Cl.⁴: **C 10 G 27/12**

(30) Priority: **25.09.86 GB 8623091**
**17.01.87 GB 8700974**

(43) Date of publication of application:
**30.03.88 Bulletin 88/13**

(84) Designated Contracting States:
**BE DE FR GB IT NL SE**

(71) Applicant: **BP Chemicals Limited**
**Belgrave House 76 Buckingham Palace Road**
**London, SW1W 0SU (GB)**

(72) Inventor: **Parker, Raymond John Louis**
**BP Chemicals Limited Belgrave House**
**76 Buckingham Palace Road London SW1 0SU (GB)**

**Soraghan, Siobhan**
**BP Chemicals Limited Hayes Road**
**Sully Penarth South Glamorgan Wales (GB)**

(74) Representative: **Krishnan, Suryanarayana Kalyana et al**
**BP INTERNATIONAL LIMITED Patents & Agreements**
**Division Chertsey Road**
**Sunbury-on-Thames Middlesex TW16 7LN (GB)**

(54) **Scavengers containing peroxides for removal of volatile sulphides.**

(57) This invention relates to the use of scavengers containing peroxides for the removal of volatile sulphides, especially hydrogen sulphide present in feeds contaminated therewith. The feed is treated with a combination of hydrogen peroxide and an alkyl hydroperoxide at a pH of 6-10. The sulphides are thereby converted into inert, soluble sulphur compounds. The scavengers used are particularly suitable for treating crude oil contaminated with hydrogen sulphide.

FIG.1
LINE SAMPLING PROCEDURE.

WELL FLUIDS AND GAS

STRIPPED GAS

TO TANK

5% NaOH SOLUTION

EP 0 261 974 A1

## Description

SCAVENGERS CONTAINING PEROXIDES FOR REMOVAL OF VOLATILE SULPHIDES

The present invention relates to scavengers containing peroxides for the removal of volatile sulphides, especially hydrogen sulphide present in contaminated feeds.

Hydrogen sulphide is often present as an undesirable contaminant in feeds, especially those associated with chemical manufacturing effluents or the processing of crude oil. Hydrogen sulphide and other volatile sulphides are toxic, have an obnoxious odour and are either inherently corrosive or are corrosive due to the nature of their oxidation products such as the oxides of sulphur and sulphuric acid. Moreover, aqueous streams emerging from wells which may have little or no oil, nevertheless appear to have an undesirably high concentration of hydrogen sulphide. Thus, these streams cannot be allowed to flow out risking pollution of the environment. Hydrogen sulphide may be removed either by a physical process such as absorption or can be scavenged by a chemical reaction whereby it is converted into relatively inert sulphur compounds. U.S. Patent No. 4473115 describes the use of chlorine dioxide for this purpose whereas US Patent No. 4548708 describes the use of hydrogen peroxide for aqueous crude oil treatment, while USSR Patent No. 488792 and Japanese Patent Publication No. 77105564 refer to the use of anthraquinone and dichlorobenzene respectively in alkaline media for waste waters. Such methods, if operated at an economically viable rate, for removal of hydrogen sulphide result in corrosion of the equipement used and can generate particulate suspension or sediment in the gas/oil separator employed during processing of crude oil. This is undesirable. It is therefore the object of the present invention to remove volatile hydrogen sulphide present in the crude oil or to scavenge it in such a way it is transformed into compounds which are much less harmful to both humans and the environment and to chemically react hydrogen sulphide in a manner so that it is not discharged with the other separated gases but remains in the liquid phase. The present invention relates to scavenging hydrogen sulphide by a chemical reaction in a manner consistent with this objective.

Accordingly, the present invention is a process for scavenging volatile sulphide contaminant present in a feed comprising water and/or crude oil, said process comprising bringing the pH of associated water either entrained with or added to the contaminated feed to a value from 6 to 10 and bringing the feed having said controlled pH value into contact with a scavenger comprising hydrogen peroxide and an alkyl hydroperoxide thereby converting the hydrogen sulphide into inert sulphur compounds which are soluble in the aqueous and/or oily phase of the feed.

By 'a feed comprising water and/or crude oil' is meant here and throughout the specification (i) a crude oil feed which is either in an untreated virgin state as recovered from an oil well, or (ii) a feed that has undergone one or more preliminary treatment stages, whether physical or chemical, prior to any cracking step to which the crude oil is subjected, or (iii) an aqueous feed derived as a by-product of chemical manufacturing including crude oil recovery, whether or not associated with crude oil recovered from an oil well, in any of which hydrogen sulphide is present as contaminant. Thus, for example the feed may be crude oil derived or recovered directly from the well or that at any stage immediately prior to the gas/oil separation step, whether or not associated with water.

The most common volatile sulphide found as contaminant in such feeds is hydrogen sulphide.

The alkyl hydroperoxide is suitably a tertiary alkyl hydroperoxide e.g. tertiary butyl hydroperoxide.

The scavenger components that may be used for this purpose can be brought into contact with the contaminated feed either separately or as a blend and is preferably a combination of solutions of hydrogen peroxide and tertiary butyl hydroperoxide (hereafter referred to as "TBHP"). This combination is capable of promoting the conversion of hydrogen sulphide into chemical compounds which are soluble either in the crude oil or in water.

The pH of the water associated with the contaminated feed has to be controlled, if necessary, by the addition of a base such as e.g. an alkali metal hydroxide or an amine e.g. diethylene triamine, or a buffer system e.g. phosphate, to bring it to a value from 6 to 10 for optimum effect.

The amount of scavenger is suitably adjusted to achieve the required degree of hydrogen sulphide removal from the contaminated feed. Typically the amount used is equivalent to a molar excess of the scavenger with respect to the hydrogen sulphide content of the contaminated feed. Thus an excess of from 1-10 moles of the total (hydro)peroxide needed per mole of the hydrogen sulphide in the contaminated feed is preferred. The scavenger components may be incorporated in the contaminated feed either as solutions pumped separately, as blends in solution or as a pumpable suspension or emulsion.

A feature of the invention is that the present process enables a relatively high rate of $H_2S$ removal to be achieved without adverse effects of undue corrosion of equipment or sedimentation in the gas separator. In the scavenger used, the molar ratio of hydrogen peroxide to the alkyl hydroperoxide such as TBHP is suitably from 20:1 to 1:5, preferably from 10:1 to 1:1. Within the ranges specified above both for the composition of the scavenger and for the amount of scavenger used, the precise amounts employed will depend upon the $H_2S$ content, pH and nature of the contaminated feed.

The scavengers used herein may contain additional compounds such as amines and metal salts which are capable of acting as corrosion inhibitors, scale inhibitors and as buffering agents. The compounds capable of acting as corrosion inhibitors may be selected from organo-phosphates, sodium tripolyphosphate, sodium silicate, sodium nitrate, sodium nitrite and long chain alkyl amines. The long chain alkyl amine suitably has 12-18 carbon atoms and is preferably tridecyl amine or hexa-decyl amine.

The compounds capable of acting as scale inhibitors include polyacrylates, phosphonates and organo polyphosphates.

Scale inhibitors may also be used to counteract any tendency towards scale formation arising from the modification of the pH of the feed, especially aqueous feeds.

These additional components may be added in an amount from 0.01g to 20g per 100g of the mixture thereof with the other scavenger components.

The scavenger is suitably incorporated into the contaminated feed, preferably prior to the point at which hydrogen sulphide would otherwise be separated. In the case of crude oil it is preferably incorporated prior to the gas/oil separation stage. The scavenger can also be added to the samples of the feed during storage and/or transportation.

The conversion of hydrogen sulphide in the contaminated feed into soluble, relatively inert compounds in the presence of the scavenger may take place under conditions of ambient or elevated temperature. After the hydrogen sulphide is trapped in the form of an appropriate soluble compound, the contaminant hydrogen sulphide can no longer escape as a gas during storage, transportation, discharge or subsequent processing stages and will remain trapped.

The process of the present invention is further illustrated with reference to the following Examples.

Field Conditions (at the time of Trial I)

Crude oil from The British Petroleum Company plc's Nettl̈eham B site containing sufficient hydrogen sulphide to give 0.0058g/1 of $H_2S$ in the separation gases at 110-120°F was used.

Production Operations:

Oil pumped from the wellhead passes through a heater to the separator, a cylindrical steel vessel, ca. 4 x 11 feet, where it is resident for 30 minutes. During this period the light ends volatilise and are discharged. Any water entrained with the oil separates out as an aqueous phase and accumulates until the level of the aqueous phase rises to trigger a release mechanism allowing drainage into a storage tank. The resultant crude oil freed from the volatile gases and water as above is channelled to storage.

Separator temperature :     110-120°F
Separator pressure :     ca 25 psig
Separator residence time water :     ca 4 hours
Separator residence time oil :     ca 30 minutes
Separator residence time gas :     less than 3 minutes
*Feed line residence time :     ca 2 minutes
Injection point :     wellhead
Sampling point :     separator
Oil throughput :     500-600 gallons/hr
*i.e. line between the injection point and the separator.

### Table 1

### Field Efficiencies - System 1

Chemicals : $H_2O_2$ 35% w/w solution in water, TBHP - 70% w/w solution in water; pH of associated water adjusted to between 7 and 8 using a 12.5% w/w solution of diethylene triamine in polyalkyl benzene.

| $H_2O_2$ | | TBHP | | Total moles | % $H_2S$ |
|---|---|---|---|---|---|
| Kg soln/ Kg $H_2S$ | moles/ mole $H_2S$ | Kg soln/ Kg $H_2S$ | moles/ mole $H_2S$ | of scavenger/ mole $H_2S$ | scavenged |
| 10.78 | 3.82 | 2.66 | 0.71 | 4.53 | 79 |

### TABLE 1A

### Example of the effect of scavenger injection on separator gas concentration

| g/l $H_2S$ before injection | g/l $H_2S$ during injection | Injection rate l/hr | | % $H_2S$ scavenged (efficiency) |
|---|---|---|---|---|
| | | $H_2O_2$ | TBHP | |
| 0.0058 | 0.0012 | 2.3 | 0.9 | 79 |

5

0 261 974

## TABLE 2

## Field Efficiencies - System 2

Chemicals : $H_2O_2$ 35% w/w solution in water, TBHP - 70% w/w solution in water, aqueous NaOH 20% w/w (to adjust the pH value of the associated water to between 7 and 8).

| $H_2O_2$ | | TBHP | | Total moles | % $H_2S$ |
|---|---|---|---|---|---|
| Kg soln Kg $H_2S$ | moles/ mole $H_2S$ | Kg soln/ Kg $H_2S$ | moles/ mole $H_2S$ | of scavenger/ mole $H_2S$ | scavenged |
| 12.25 | 4.34 | 2.78 | 0.75 | 5.09 | 91.5 |

## TABLE 2A

## Example of the effect of scavenger injection on separator gas concentration

| g/l $H_2S$ before injection | g/l $H_2S$ during injection | Injection rate l/hr | | % $H_2S$ scavenged (efficiency) |
|---|---|---|---|---|
| | | $H_2O_2$ | TBHP | |
| 0.0058 | 0.0004 | 2.5 | 0.9 | 91.5 |

### Field Corrosion Tests (Trial II)
Scavenger systems 3 and 4 shown in Table 3 below were tested.

### Test Method
Corrosion rates were assessed using a Polarisation Admittance by Instantaneous Rate (known as "PAIR") meter (Model 103, supplied by Petrolite Corp), fitted with carbon steel electrodes. Readings were taken on separator water samples collected in a 'test cell'. the results are expressed as mls/yr which is a unit equivalent to a corrosion of the electrodes by 1/1000 inch per year. The potentiometric readings are directly proportional to the corrosivity towards carbon steel of the water samples being tested.

(a) Static test : the cell was filled at the separator and subsequently connected to the PAIR meter with minimum delay and then readings were taken and logged.

(b) Flow test : water was allowed to flow from the separator through the PAIR meter cell for a period of time. During this time readings were taken and logged.

5

### TABLE 3

| System | Chemicals | Moles Peroxide/ mole $H_2S$ | Efficiency of $H_2S$ removal | pH | Static mls/yr | Flow mls/yr | Comments |
|---|---|---|---|---|---|---|---|
| Baseline* | – | – | 0 | 7–8 | 1.2–3.2 | 10 | no pitting |
| 3 | $H_2O_2$+NaOH* | 2.6 | 81 | 7–8 | 65–100 | 120 | pitting |
| | | 1.6 | 57 | 7–8 | 76–88 | 110 | pitting |
| | | 0.85 | 44 | 7–8 | 43–49 | 70 | slight pitting |
| 4 | $H_2O_2$+TBHP** + NaOH | 1.7 | 72 | 7–8 | 6–12 | 16 | no pitting |

*Comparative Test (not according to the invention)

**Molar ratio of $H_2O_2$ to TBHP was ca. 6:1

The above results show that in the absence of TBHP, the corrosion rate is considerably greater and that in the absence of any peroxide although there is marginally less corrosion none of the hydrogen sulphide is removed. Thus the synergism of using $H_2O_2$ and TBHP over the specific pH range is established.

#### Effect of the Scavenger on Contaminated Aqueous Feed at a BP Petroleum Development Oil Field Production Site in the East Midlands, UK (Trial III)

1. Background
The water producing well in question was intended for the disposal of effluent water. However, attempts to back flow were unsuccessful, leaving the well in need of being cleared of debris resulting from perforations. This was to be done by allowing a substantial volume of water to flow from the well. The water was known to be sour, the full extent of which was not clear, but estimated to contain about 20 ppm $H_2S$. Furthermore, the flow rate was expected to be high, at about 500 bpd. Therefore, charging into the open-topped tanks for any length of time would have caused an acute health and environmental hazard. The well which has been shut in for 2 years was fed into one of two storage tanks when opened.
The operation ran over four days from 9th October to 13th October 1986.

2. Operation Details

2.1 The Scavenger Package
The package consisted of GS 900/D used in conjunction with 10% aqueous sodium hydroxide acting as a pH modifier. GS 900/D is a BP Chemicals product based on a peroxide blend, and consists by weight of 50% $H_2O$, 40% hydrogen peroxide solution (35% aqueous), 10% tert butyl hydroperoxide solution (70% aqueous). Each kg of GS 900/D contained 4.06 moles of $H_2O_2$, 0.71 moles of TBHP and 4.77 moles of peroxy material. Molar ratio of $H_2O_2$ : TBHP was about 5.7 : 1.

2.2 Operating Procedures

2.2.1 Scavenger Injection
GS 900/D and the caustic solution were pumped to a common injection point on the wellhead. The storage tank was located approximately 10 yards away from this injection point. Flow rates were monitored and adjusted when necessary with the aid of sightglasses and/or 'calibration' feed-pots.

### 2.2.2 Monitoring of Well-Fluids Production

The rate of water production was determined from regular dip measurements of the storage tank contents.

### 2.2.3 Sampling and Assessment Procedures

#### (a) H2S Content in Well Fluids

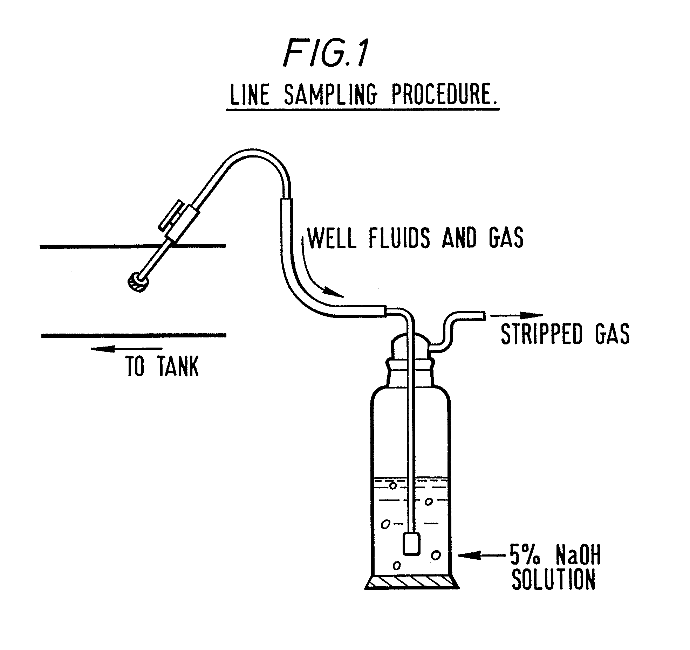

Line samples were slowly bled from a point close to tha tank into a trap containing 20% sodium hydroxide solution. (Figure 1). The resulting mixture of line water and caustic solution was analysed using a standard iodine titration method in Vogel's Textbook of Quantitative Inorganic Analysis (4th Edition), Longman 1983. Line samples could only be taken when there was no dosed scavenger present as peroxides would have interfered in the titration reactions.

#### (b) H2S Content in the Tank Headspace

The headspace hydrogen sulphide content was frequently assessed by Drager tube available from Drager Safety (Drägerwerke AG Lübeck) (expressed as $H_2S$ ppm (v/v)). However, the number obtained could not be related directly to the fluids concentration (which fluctuated depending on the sourness of the incoming water) as the head volume decreased while the tank filled and the restricted exit through the vent allowed a build up of hydrogen sulphide. However this was a useful qualitative indication of the presence of hydrogen sulphide in the tank fluids.

### 2.3 Monitoring of Well H2S Production

This was calculated using the concentration of hydrogen sulphide found in the untreated line fluids at time 'T' and the flow rate appropriate for that time. Thus the hourly production of hydrogen sulphide is given by:

$$H_2S_T(g/hr) = H_2S_T(g/l) \times Flow\ Rate_T(l/hr)$$

To measure $H_2S_T(g/l)$ during treatment with GS 900/D, injection was suspended long enough for the scavenger to flush from the line and for the sample to be taken (less than 1 minute).

### 2.4 Assessment of Scavenger Activity

It was assumed that most or all of the hydrogen sulphide carried in the fluids entering the tank was released practically instantaneously into the headspace. Therefore its detection by Drager tube was taken as a qualitative measure of scavenger failure or success. When hydrogen sulphide was detected in the headspace, scavenger dosage was increased until the "ppms" were seen to drop. Alternatively when none was detected the dosage was decreased until sulphide was just discernible. The critical dosages, along with the relevant fluid flow rates and sulphide concentrations enabled the calculation of the molar ratios of scavenger to H2S at which scavenging ceased to be 100% effective (Table 3).

### 3. Results and Discussion

The results of the above experiments are tabulated in Tables 4 and 5 below.

GS 900/D was shown to be capable of scavenging 100% of the hydrogen sulphide present in the produced fluids from the well at a dosage of 2 moles of scavenger actives to one of hydrogen sulphide.

## Table 4

### Critical Dosages

| GS 900/D lhr$^{-1}$ | H$_2$S kg hr$^{-1}$ | GS 900/D kg kg$^{-1}$ | H$_2$S moles mole$^{-1}$ | H$_2$S Detected |
|---|---|---|---|---|
| 12.5 | 1.75 | 7.14 | 1.19 | Rising |
| 30 | 2.065 | 14.53 | 2.41 | Falling |
| 45 | 5.15 | 8.71 | 1.45 | Rising |
| 45 | 3.869 | 11.63 | 1.93 | Steady |
| 45 | 3.77 | 11.93 | 1.98 | Falling |

## Table 5

### Examples of Readings

| Water Flow lhr$^{-1}$ | H$_2$S Content ppm w/v | H$_2$S Prodn. kg hr$^{-1}$ | GS 900/D l hr$^{-1}$ | Tank Headspace ppm v/v |
|---|---|---|---|---|
| 3147[1] | 940 | 2.96 | 45 | 10 |
| 4682[2](a) | 1100 | 5.15 | 45 | 40 |
| 4255[2](b) | 1000 | 4.255 | 45 | 100 |

[1] Dosage sufficient to achieve 100% kill - up to 10 ppm regarded as neglible in the tank headspace.
[2] (b) 30 minutes after (a) - shows increasing concentration in the tank headspace indicating that all the H$_2$S in the fluids has not been scavenged.

Subsequent analysis of the treated effluent water showed hydrogen sulphide to be largely converted into inorganic sulphur derivatives.

**Claims**

1. A process for scavenging a volatile sulphide contaminant present in a feed comprising water and/or crude oil, said process comprising bringing the pH of associated water either entrained with or added to the contaminated feed to a value from 6 to 10 and bringing the feed having said controlled pH value into contact with a scavenger comprising hydrogen peroxide and an alkyl hydroperoxide thereby converting the hydrogen sulphide into inert sulphur compounds which are soluble in the aqueous and/or oily phase of the feed.

2. A proces according to claim 1 wherein the scavenger components are brought into contact with the contaminated feed either separately or as a blend.

3. A process according to claim 1 or 2 wherein the pH of the water associated with the feed is brought within the range of 6-10 by the addition of a base or a buffer system to the feed.

4. A process according to any one of the preceding claims wherein the molar ratio of hydrogen peroxide to the alkyl hydroperoxide in the scavenger is from 20:1 to 1:5.

5. A process according to any one of the preceding claims wherein the alkyl hydroperoxide is a tertiary hydroperoxide.

6. A process according to any one of the preceding claims wherein the amount of scavenger used is in an excess of 1-10 moles based on the total (hydro)peroxide needed per mole of hydrogen sulphide in the contaminated feed.

7. A process according to any one of the preceding claims wherein the scavenger contains in addition to the (hydro)peroxide compounds capable of acting as corrosion inhibitors, scale inhibitors and/or buffering agents.

8. A process according to claim 7 wherein the compounds capable of acting as corrosion inhibitors are selected from organophosphates, sodium tripolyphosphates, sodium silicate, sodium nitrate, sodium nitrite and long chain alkyl amines.

9. A process according to claim 7 wherein the long chain alkyl amine has 12-18 carbon atoms in the alkyl chain.

10. A process according to any one of the preceding claims 7-9 wherein the compounds capable of acting as scale inhibitors are selected from polyacrylates, phosphonates and organo phosphates.

11. A process according to any one of the preceding claims 7-10 wherein the additional compounds are present in the scavenger in an amount from 0.01 to 20g per 100g of the mixture thereof with the other scavenger components.

0261974

# FIG.1
## LINE SAMPLING PROCEDURE.

WELL FLUIDS AND GAS

STRIPPED GAS

TO TANK

5% NaOH
SOLUTION

## DOCUMENTS CONSIDERED TO BE RELEVANT

EP 87308475.0

| Category | Citation of document with indication, where appropriate, of relevant passages | Relevant to claim | CLASSIFICATION OF THE APPLICATION (Int. Cl.4) |
|---|---|---|---|
| A | US - A - 3 847 798 (YOO) <br> * Claim 1 * <br> -- | 1 | C 10 G 27/12 |
| A | US - A - 3 565 793 (HERBSTMAN et al.) <br> * Claims 1,15; examples * <br> -- | 1,5 | |
| A | US - A - 3 551 328 (COLE et al.) <br> * Claims 1,5 * <br> ---- | 1,5 | |

**TECHNICAL FIELDS SEARCHED (Int. Cl.4)**

C 10 G 27/00

The present search report has been drawn up for all claims

| Place of search <br> VIENNA | Date of completion of the search <br> 20-11-1987 | Examiner <br> MARCHART |
|---|---|---|